# EUROPÄISCHE PATENTSCHRIFT

(11) **EP 2 388 174 B1**
(45) Veröffentlichungstag und Bekanntmachung des Hinweises auf die Patenterteilung: **12.02.2014**
(21) Anmeldenummer: 10014238.9
(22) Anmeldetag: 03.11.2010
(51) Int. Cl.: B62B 1/20

(54) **Zusammenlegbarer Lastenkarren**
Collapsible load cart
Chariot pour charges repliable

(30) Priorität: 19.05.2010 CN 201020194602 U
(43) Veröffentlichungstag der Anmeldung: 23.11.2011
(73) Patentinhaber: Zhejiang Hengfeng Top Leisure Co., Ltd., Hangzhou 310015 (CN)
(72) Erfinder: Yang, Baoqing, Hangzhou 310015 (CN)
(74) Vertreter: Vièl, Christof

(56) Entgegenhaltungen:
- GB-A- 1 035 545
- GB-A- 2 339 741
- US-A- 3 565 453

## Beschreibung

Die Erfindung betrifft einen zusammenlegbaren Lastenkarren mit einem Rahmen, mit mindestens einem im Fahrzustand im vorderen Bereich des Rahmens unterhalb des Rahmens angeordneten Rad und mindestens einem an dem dem Rad gegenüberliegenden hinteren Bereich des Rahmens angeordneten Handgriff.

Lastenkarren sind aufgrund ihrer geringen Größe und der dennoch großen Transportkapazität als einfaches Transportmittel weit verbreitet. Mit ihnen können beispielsweise Lasten von anderen Transportmitteln, wie LKWs, zu einem nicht für diese zugänglichen Lagerort transportiert werden. Auch im Freizeitbereich erfreuen sich Lastenkarren mit steigendem Komfortbedürfnis zunehmender Beliebtheit. So werden Lastenkarren beispielsweise im Campingbereich für den Transport von Zelten, Campingmöbeln und sonstigem Zubehör oder auch zum Einkaufen in Fußgängerzonen immer häufiger benutzt.

Allerdings sind Lastenkarren sperrig und auf Marktständen oder auch in Garagen nur schwierig unterzubringen.

Ein zusammenlegbarer Wäschewagen, der platzsparend verstaut werden kann, nachdem das Aufnahmegefäß entnommen wurde, ist beispielsweise aus der GB 1 035 545 A bekannt.

Aus der US 3 565 453 A und der GB 2 339 741 A sind zusammenlegbare Schubkarren bekannt. Die US 3 565 453 A offenbart für eine kompakte Lagerung des Schubkarrens, dass das Rad, die Rahmenbeine sowie der Handgriff auf der Unterseite des Rahmens zusammengelegt werden können. Nachteilig bei diesem Schubkarren ist insbesondere, daß der Schubkarren im zusammengelegten Zustand schwer zu tragen ist. Um den zusammenlegbaren Schubkarren der GB 2 339 741 A komfortabel tragen zu können, muss dieser jedoch teilweise auseinandermontiert werden.

Aus der CN 290028 Y ist ein zusammenlegbarer Lastenkarren bekannt, der einen Rahmen, ein Rad und einen Handgriff aufweist. Nachteilig bei diesem Lastenkarren ist insbesondere, daß der Rahmen in Bodennähe angeordnet ist und der Lastenkarren im zusammengelegten Zustand schwer zu tragen ist.

Der Erfindung liegt daher die Aufgabe zugrunde, einen zusammenlegbaren Lastenkarren zu schaffen, der bei hoher Stabilität ein möglichst geringes Gewicht aufweist und der leicht und auf ein kleines Maß zusammenlegbar ist.

Diese Aufgabe wird erfindungsgemäß dadurch gelöst, daß das Rad an einer im hinteren Bereich des Rahmens angelenkten ersten Stange drehbar befestigt ist, wobei eine zweite Stange an der ersten Stange im Bereich der Radbefestigung angelenkt ist, an deren Ende ein Verbindungselement angelenkt ist, welches wiederum an einem den Neigewinkel des Verbindungselementes zur Vorderseite des Rahmens hin begrenzendes erstes Befestigungselement, dessen hinteres Ende am Rahmen angelenkt ist, angelenkt ist.

Im Betriebszustand liegt das Verbindungselement somit an dem den Neigewinkel des Verbindungselementes begrenzenden Teil des ersten Befestigungselementes an und drückt dessen vorderen Bereich gegen die Unterseite des Rahmens, so daß der Winkel α zwischen dem Rahmen und dem Verbindungselement mehr als 90° beträgt. Durch die vertikal gerichtete Aufstandskraft des Rades im Betriebszustand, die das Verbindungselement gegen das den Neigewinkel begrenzende Element des ersten Befestigungselementes drückt, wird ein Zusammenlegen des Lastenkarrens während des Betriebes sicher verhindert. Soll der Lastenkarren zusammengelegt werden, wird Druck auf das Gelenk zwischen der zweiten Stange und das Verbindungselement ausgeübt, wodurch das erste Befestigungselement, das Verbindungselement und die daran angelenkte zweite Stange zur Rückseite des Lastenkarrens hin verschwenkt werden. Das Rad schwenkt dann um den Drehpunkt der ersten Stange nach oben zum vorderen Bereich des Rahmens hin und kann so platzsparend angeordnet werden.

Eine Weiterbildung der Erfindung besteht darin, daß in dem vorderen Bereich des Rahmens eine Aussparung für das Rad vorgesehen ist.

Dies ermöglicht es, das Rad nicht nur unter den Rahmen zu verschwenken, sondern es teilweise durch den Rahmen hindurch in die Aussparung hineinzuschwenken, was es ermöglicht, daß der Lastenkarren im zusammengelegten Zustand lediglich eine Breite aufweist, die dem Raddurchmesser entspricht.

Im Rahmen der Erfindung ist auch vorgesehen, daß im hinteren Bereich des Rahmens eine Stützvorrichtung über ein den Neigewinkel der Stützvorrichtung zum hinteren Bereich des Rahmens hin begrenzendes zweites Befestigungselement angelenkt ist.

Ist die Stützvorrichtung ausgeklappt, so ist sie zum hinteren Bereich des Rahmens hin geneigt, wodurch verhindert wird, daß sie ungewollt einklappt. Zum Einklappen wird das freie Ende der Stützvorrichtung zum vorderen Bereich des Rahmens hin verschwenkt. Im eingeklappten Zustand liegt die Stützvorrichtung dann an der Unterseite des Rahmens an.

In diesem Zusammenhang ist es vorteilhaft, daß die erste Stange im hinteren Bereich des Rahmens an der Stützvorrichtung angelenkt ist.

Durch Einklappen der Stützvorrichtung und gleichzeitiges Drücken auf das Gelenk zwischen der zweiten Stange und das Verbindungselement kann dann der Lastenkarren zusammengelegt werden.

Weiterhin ist erfindungsgemäß vorgesehen, daß der Handgriff z-förmig ausgebildet ist.

Dies ermöglicht eine angenehme Arbeitsposition auch bei einem relativ niedrig über dem Boden angeordneten Rahmen.

Es ist zweckmäßig, daß der Handgriff zum vorderen Bereich des Rahmens hin klappbar oder abnehmbar ist.

Dies ermöglicht es, den Handgriff im zusammengelegten Zustand platzsparend unterzubringen.

Schließlich ist es vorteilhaft, daß der Rahmen, die erste und die zweite Stange, das Verbindungsstück, die Stützvorrichtung und/oder der Handgriff aus Vierkantrohr bestehen.

Dies ermöglicht eine hohe Belastbarkeit bei geringem Gewicht. Bei ineinandergreifenden Teilen, wie beispielsweise dem hinteren Ende des Rahmens und dem Handgriff, wird hierdurch ein Verdrehen dieser Teile relativ zueinander vermieden.

Nachfolgend wird die Erfindung anhand von Zeichnungen dargestellt.

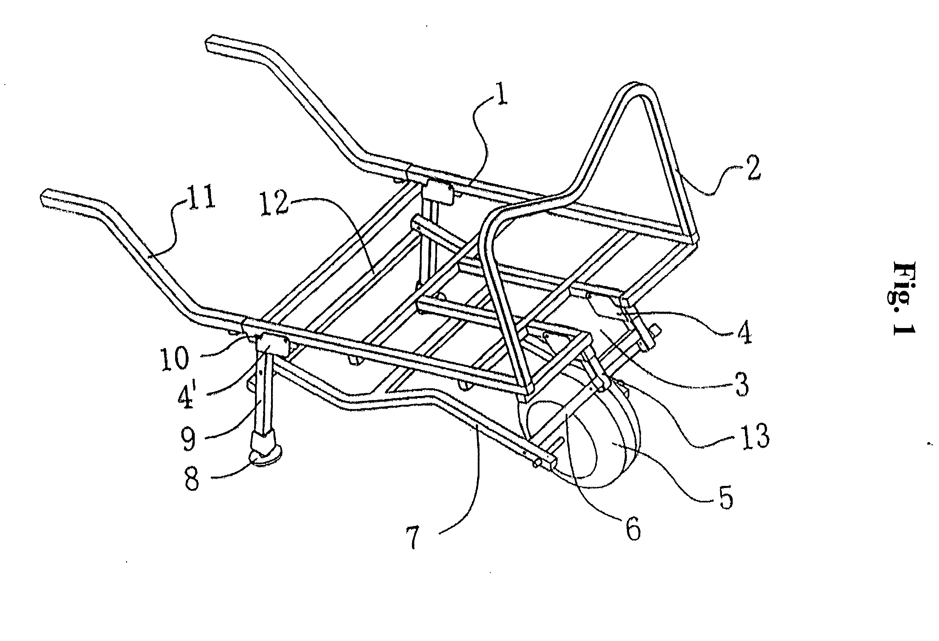

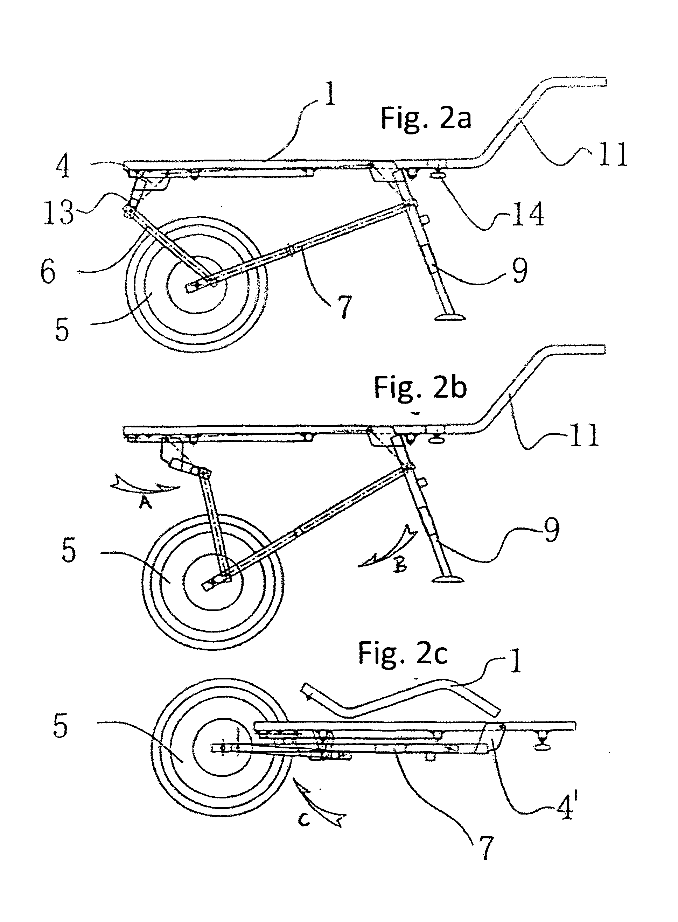

Es zeigen
- Fig. 1: einen erfindungsgemäßen Lastenkarren in perspektivischer Ansicht,
- 2b und 2c: eine Seitenansicht des erfindungsgemäßen Lastenkarrens im Betriebszustand (Fig. 2a) und beim Zusammenlegen (Fig. 2b und Fig. 2c).

Wie aus Fig. 1 ersichtlich, weist der erfindungsgemäße Lastenkarren einen Rahmen 1 auf, in dessen vorderen Bereich ein Rad 5 angeordnet ist und in dessen hinteren Bereich zwei z-förmige Handgriffe 11 angeordnet sind, was eine ergonomisch günstige Arbeitsposition auch bei einem relativ niedrig über dem Boden angeordneten Rahmen 1 ermöglicht.

Im vorderen Bereich des Rahmens 1 ist zudem ein nach oben ragender Bügel 2 zum Sichern der Lasten angeordnet, der beispielsweise auf entsprechende Vorsprünge des Rahmens 1 gesteckt ist und abnehmbar sein kann. Ebenfalls im vorderen Bereich des Rahmens 1 befindet sich eine Ausnehmung 3 für die Aufnahme des Rades 5 im zusammengelegten Zustand des Lastenkarrens.

Im hinteren Bereich des Rahmens 1 sind zwei Stützvorrichtungen 9 angeordnet, die über ein den Neigewinkel der Stützvorrichtungen 9 zum hinteren Bereich des Rahmens 1 hin begrenzendes zweites Befestigungselement 4' am Rahmen 1 angelenkt sind, so daß ihr freies Ende im ausgefahrenen Zustand zum hinteren Bereich des Rahmens 1 hin geneigt ist und an dem winkelbegrenzenden Element 10 des zweiten Befestigungselementes 4' anliegt. Am freien Ende der Stützvorrichtungen 9 sind Teller 8 zum Erhöhen der Standsicherheit angeordnet. Die beiden Stützvorrichtungen 9 werden durch eine Querstrebe 12 miteinander verbunden.

Wie aus den Fig. 1 sowie 2a bis 2c hervorgeht, ist das Rad 5 an einer im hinteren Bereich des Rahmens 1 angelenkten ersten Stange 7 drehbar befestigt, die wiederum an der Stützvorrichtung 9 angelenkt ist. Eine zweite, kürzere Stange 6 ist an der ersten Stange 7 im Bereich der Befestigung des Rades 5 angelenkt. An deren Ende ist ein Verbindungselement 13 angelenkt, welches wiederum an einem den Neigewinkel des Verbindungselementes 13 zur Vorderseite des Rahmens 1 hin begrenzendes erstes Befestigungselement 4 angelenkt ist, dessen hinteres Ende am Rahmen 1 angelenkt ist.

Im Betriebszustand liegt das Verbindungselement 13 somit an dem den Neigewinkel des Verbindungselementes 13 begrenzenden Teil des ersten Befestigungselementes 4 an und drückt dessen vorderen Bereich gegen die Unterseite des Rahmens 1, so daß der Winkel α zwischen dem Rahmen 1 und dem Verbindungselement 13 mehr als 90° (hier ca. 110°) beträgt. Durch die vertikal gerichtete Aufstandskraft des Rades 5 im Betriebszustand, die das Verbindungselement 13 gegen das den Neigewinkel begrenzende Element des ersten Befestigungselementes 4 drückt, wird ein Zusammenlegen des Lastenkarrens während des Betriebes somit sicher verhindert.

Soll der Lastenkarren zusammengelegt werden, wird (Fig. 2b) Druck (Pfeil A) auf das Gelenk zwischen der zweiten Stange 6 und das Verbindungselement 13 ausgeübt, wodurch das erste Befestigungselement 4, das Verbindungselement 13 und die daran angelenkte zweite Stange 6 zum hinteren Bereich des Lastenkarrens hin verschwenkt werden. Gleichzeitig oder nachfolgend wird die Stützvorrichtung 9 zum vorderen Bereich des Rahmens 1 hin verschwenkt (Pfeile B und C), wodurch das Rad 5 um den Drehpunkt der ersten Stange 7 nach oben zum vorderen Bereich des Rahmens 1 hin in die Aussparung 3 des Rahmens 1 hinein verschwenkt wird und so platzsparend angeordnet werden kann. Dies ermöglicht es, das Rad nicht nur unter den Rahmen zu verschwenken, sondern es teilweise durch den Rahmen hindurch in die Aussparung hineinzuschwenken, womit erreicht wird, daß der Lastenkarren im zusammengelegten Zustand lediglich eine Breite aufweist, die dem Raddurchmesser entspricht.

Im eingeklappten Zustand liegt die Stützvorrichtung dann an der Unterseite des Rahmens an.

Die Handgriffe 11 können zum vorderen Bereich des Rahmens 1 hin klappbar oder - wie hier dargestellt - mittels einer lösbaren Befestigungsvorrichtung 14 abnehmbar ausgestaltet sein.

Dies ermöglicht es, die Handgriffe im zusammengelegten Zustand platzsparend unterzubringen.

Schließlich ist es vorteilhaft, daß der Rahmen 1, die erste Stange 7 und die zweite Stange 6, das Verbindungsstück 13, die Stützvorrichtung 9, der Bügel 2 und/oder die Handgriffe 11 aus Vierkantrohr bestehen, was eine hohe Belastbarkeit bei geringem Gewicht und bei ineinandergreifenden Teilen, wie beispielsweise dem hinteren Ende des Rahmens 1 und den Handgriffen 11 eine Verdrehsicherung mit sich bringt.

## Patentansprüche

1. Zusammenlegbarer Lastenkarren mit einem Rahmen (1), mit mindestens einem im Fahrzustand im vorderen Bereich des Rahmens (1) unterhalb des Rahmens (1) angeordneten Rad (5) und mindestens einem an dem dem Rad (5) gegenüberliegenden hinteren Bereich des Rahmens (1) angeordneten Handgriff (11), **dadurch gekennzeichnet, daß** das Rad (5) an einer im hinteren Bereich des Rahmens (1) angelenkten ersten Stange (7) drehbar befestigt ist, wobei eine zweite Stange (6) an der ersten Stange (7) im Bereich der Radbefestigung angelenkt ist, an deren Ende ein Verbindungselement (13) angelenkt ist, welches wiederum an einem den Neigewinkel des Verbindungselementes zur Vorderseite des Rahmens (1) hin begrenzendes erstes Befestigungselement (4), dessen hinteres Ende am Rahmen (1) angelenkt ist, angelenkt ist.

2. Zusammenlegbarer Lastenkarren gemäß Anspruch 1, **dadurch gekennzeichnet, daß** in dem vorderen Bereich des Rahmens (1) eine Aussparung (3) für das Rad (5) vorgesehen ist.

3. Zusammenlegbarer Lastenkarren gemäß Anspruch 1, **dadurch gekennzeichnet, daß** im hinteren Bereich des Rahmens (1) eine Stützvorrichtung (9) über ein den Neigewinkel der Stützvorrichtung (9) zum hinteren Bereich des Rahmens (1) hin begrenzendes zweites Befestigungselement (4') angelenkt ist.

4. Zusammenlegbarer Lastenkarren gemäß Anspruch 3, **dadurch gekennzeichnet, daß** die erste Stange (7) im hinteren Bereich des Rahmens (1) an der Stützvorrichtung (9) angelenkt ist.

5. Zusammenlegbarer Lastenkarren gemäß Anspruch 1, **dadurch gekennzeichnet, daß** der Handgriff (11) z-förmig ausgebildet ist.

6. Zusammenlegbarer Lastenkarren gemäß Anspruch 1, **dadurch gekennzeichnet, daß** der Handgriff (11) zum vorderen Bereich des Rahmens (1) hin klappbar oder abnehmbar ist.

7. Zusammenlegbarer Lastenkarren gemäß Anspruch 1 oder 3, **dadurch gekennzeichnet, daß** der Rahmen (1), die erste Stange (7) und die zweite Stange (6), das Verbindungselement (13), die Stützvorrichtung (9) und/oder der Handgriff (11) aus Vierkantrohr bestehen.

## Claims

1. Collapsible load cart with a frame (1), at least one wheel (5) located, in travel mode, beneath the frame (1) in the anterior portion thereof and at least one handle (11) located at the rear of the frame (1), opposite the wheel (5), **characterised in that** the wheel (5) is rotatably attached to a first rod (7) hinged to the rear portion of the frame (1), there being hinged to the first rod (7), in the vicinity of the wheel mounting, a second rod (6) to whose end a connecting member (13) is hinged, which, in turn, is hinged to a first mounting (4) that limits the angle of inclination of the connecting member relative to the front end of the frame (1), the rear end of said mounting (4) being hinged to the frame (1).

2. Collapsible load cart according to claim 1, **characterised in that** a gap (3) for the wheel (5) is provided in the anterior portion of the frame (1).

3. Collapsible load cart according to claim 1, **characterised in that** a support device (9) is hinged to the rear portion of the frame (1) via a second mounting (4'), which limits the angle of imclination of the support device (9) relative to the rear portion of the frame (1).

4. Collapsible load cart according to claim 3, **characterised in that**, towards the rear of the frame (1), the first rod (7) is hinged to the support device (9).

5. Collapsible load cart according to claim 1, **characterised in that** the handle (11) is of z-shaped configuration.

6. Collapsible load cart according to claim 1, **characterised in that** the handle (11) can be folded towards the front of the frame (1) or can be detached.

7. Collapsible load cart according to claim 1 or 3, **characterised in that** the frame (1), the first rod (7) and the second rod (6), the connecting member (13), the support device (9) and/or the handle (11) are made of rectangular hollow section.

## Revendications

1. Charriot pour charges repliable avec un cadre (1), avec au moins une roue (5) disposée à l'état de marche dans la section avant du cadre (1) en dessous du cadre (1), et au moins une poignée (11) disposée dans la section arrière du cadre (1) opposée à la roue (5), **caractérisé en ce que** la roue (5) est fixée pivotante sur une première barre (7) articulée dans la section arrière du cadre (1), une deuxième barre (6) étant articulée à la première barre (7) au niveau de la fixation de la roue et à l'extrémité de laquelle est articulé un élément de raccordement (13) qui à son tour est articulé à un premier élément de fixation (4) qui limite l'angle d'inclinaison de l'élément de raccordement en direction de la face avant du cadre (1) et dont l'extrémité arrière est articulée au cadre (1).

2. Charriot pour charges repliable selon la revendication 1, **caractérisé en ce qu'**un évidement (3) est prévu pour la roue (5) dans la section avant du cadre (1).

3. Charriot pour charges repliable selon la revendication 1, **caractérisé en ce qu'**un dispositif d'appui (9) est articulé dans la section arrière du cadre (1) par le biais d'un deuxième élément de fixation (4') qui limite l'angle d'inclinaison du dispositif d'appui (9) en direction de la section arrière du cadre (1).

4. Charriot pour charges repliable selon la revendication 3, **caractérisé en ce que** la première barre (7) est articulée sur le dispositif d'appui dans la section arrière du cadre.

5. Charriot pour charges repliable selon la revendication 1, **caractérisé en ce que** la poignée est en forme de Z.

6. Charriot pour charges repliable selon la revendication 1, **caractérisé en ce que** la poignée (11) peut être rabattue en direction de la section avant du cadre ou peut être démontée.

7. Charriot pour charges repliable selon la revendication 1 ou 3, **caractérisé en ce que** le cadre (1), la première barre (7) et la deuxième barre (6), l'élément de raccordement (13), le dispositif d'appui (9) et/ou la poignée (11) sont réalisés dans des tubes à section carrée.
